# EUROPEAN PATENT APPLICATION

(11) **EP 4 826 708 A1**
(43) Date of publication of application: **21.10.2026**
(21) Application number: 24909952.4
(22) Date of filing: 03.09.2024
(51) Int. Cl.: G09G 3/36

(54) **DRIVING METHOD, IMAGE MODULATION METHOD, RELATED DEVICE, AND STORAGE MEDIUM**

(30) Priority: 27.12.2023 CN 202311833013
(71) Applicant: Huawei Technologies Co., Ltd., Shenzhen, Guangdong 518129 (CN)
(72) Inventor: YIN, Lu, Shenzhen, Guangdong 518129 (CN); LI, Jun, Shenzhen, Guangdong 518129 (CN); HUANG, Ke, Shenzhen, Guangdong 518129 (CN); HU, Yan, Shenzhen, Guangdong 518129 (CN)
(74) Representative: Huawei European IPR
(86) International application number: PCT/CN2024/116577
(87) International publication number: WO 2025/139006

(57) **Abstract**

A driving method, an image modulation method, a related device, and a storage medium are disclosed, so that when an image modulator is driven by using an over-saturation voltage, luminance emitted by an image modulation module is effectively improved. The method includes: first obtaining a first frame corresponding to a target pixel, where the first frame corresponds to a first driving voltage, and the first driving voltage corresponds to a first bit value, and the first driving voltage is an over-saturation voltage at which the target pixel modulates a light beam; and then inserting M target subframes into the first frame to obtain a second frame, where M is any integer greater than 1, and the target subframes correspond to a second driving voltage, where the second driving voltage corresponds to a second bit value, and in the M target subframes, a sub frame of the first frame is spaced between two adjacent target subframes, or a part of the subframe is spaced between two adjacent target subframes.

## Description

This application claims priority to Chinese Patent Application No. 202311833013.2, filed with the China National Intellectual Property Administration on December 27, 2023 and entitled "DRIVING METHOD, IMAGE MODULATION METHOD, RELATED DEVICE, AND STORAGE MEDIUM", which is incorporated herein by reference in its entirety.

### TECHNICAL FIELD

This application relates to the field of optical communication technologies and the field of image display, and in particular, to a driving method, an image modulation method, a related device, and a storage medium.

### BACKGROUND

To implement projection imaging, an image modulation module needs to modulate a light beam. For example, the image modulation module may be liquid crystal on silicon (liquid crystal on silicon, LCOS). The LCOS is driven to modulate the light beam in a digital driving manner, such as pulse width modulation (pulse width modulation, PWM).

To ensure that an image obtained through LCOS projection imaging has sufficient luminance, it is necessary to increase the luminance of the modulated light beam emitted by the LCOS. Therefore, the LCOS converts a driving voltage into a first saturation voltage, a second saturation voltage, and a third saturation voltage by using a digital-to-analog converter (DAC). The first saturation voltage is a voltage at which the LCOS modulates a red light beam to emit maximum luminance, the second saturation voltage is a voltage at which the LCOS modulates a green light beam to emit maximum luminance, and the third saturation voltage is a voltage at which the LCOS modulates a blue light beam to emit maximum luminance. In this case, the LCOS modulates the red light beam, the green light beam, and the blue light beam at the first saturation voltage, the second saturation voltage, and the third saturation voltage respectively.

However, in a process in which the LCOS modulates the light beam, switching speeds of different saturation voltages are very fast, and usually reach 240 hertz (Hz) or even 360 Hz. A drive circuit provides a driving voltage for the LCOS, and the drive circuit has a parasitic capacitor. The parasitic capacitor easily causes a failure to implement fast switching of the saturation voltage. In addition, the parasitic capacitor causes the driving voltage to decrease at a slower speed. Consequently, a voltage reflectivity (voltage reflectivity, VR) characteristic is unstable, and direct current (direct current, DC) balance deteriorates. This reduces a service life of liquid crystal in the LCOS. If the driving voltage is frequently switched to the different saturation voltages by using the DAC, power consumption of the DAC is increased.

### SUMMARY

Embodiments of this application provide a driving method, an image modulation method, a related device, and a storage medium, to effectively improve, when an image modulator is driven by using an over-saturation voltage, luminance emitted by an image modulation module.

According to a first aspect, an embodiment of this application provides a driving method, where the method is applied to an image modulation module, the image modulation module includes a plurality of pixels, and each pixel includes a first electrode, a second electrode, and liquid crystal located between the first electrode and the second electrode. The method includes: first obtaining a first frame corresponding to a target pixel, where the target pixel is one of the plurality of pixels, the first frame corresponds to a first driving voltage, the first driving voltage is an absolute value of a difference between a voltage applied to the first electrode and a voltage applied to the second electrode, the first driving voltage corresponds to a first bit value, so that the target pixel to which the first driving voltage is applied is in an on state to emit a modulated light beam, and the modulated light beam emitted by the target pixel can be projected and imaged, for example, the first bit value is a bit 1, and the first driving voltage is an over-saturation voltage at which the target pixel modulates the light beam; then inserting M target subframes into the first frame to obtain a second frame, where M is any integer greater than 1, the target subframe corresponds to a second driving voltage, the second driving voltage is the absolute value of the difference between the voltage applied to the first electrode and the voltage applied to the second electrode, the second driving voltage corresponds to a second bit value, for example, the second bit value is a bit 0, and in the M target subframes, a part of the first frame is spaced between two adjacent target subframes, for example, a subframe of the first frame is spaced between two adjacent target subframes, and for another example, a part of the subframe is spaced between two adjacent target subframes; and finally driving the target pixel by using the second frame.

According to the method shown in the aspect, the controller drives the image modulator to perform image modulation in a digital driving manner. In the digital driving manner, the driving voltage applied to the target pixel is fixed, and a magnitude of the driving voltage does not need to be switched. This avoids instability caused by a parasitic capacitor of the drive circuit in a voltage conversion process, and improves stability of a VR curve and DC balance. Because the magnitude of the driving voltage does not need to be switched, power consumption caused by switching the driving voltage is reduced. In addition, the red light beam, the blue light beam, and the green light beam may be switched to be modulated at any time according to an actual requirement, and a time sequence of modulation between the light beams does not need to be limited, thereby improving flexibility of color sequence design during image modulation. In addition, for light beams of different wavelengths, the light beams are driven by using an over-saturation voltage in a unified manner, and it can be further ensured that a maximum luminance value emitted by each pixel of the image modulator is basically not lost, thereby effectively increasing the maximum luminance value emitted by the image modulator.

Based on the first aspect, in an optional implementation, after obtaining the first frame corresponding to the target pixel, the method further includes: dividing the first frame into N subframes, where N is any integer greater than 1, the N subframes include a first subframe and a second subframe adjacent in time, the first subframe corresponds to a first polarity of a first driving voltage, the second subframe corresponds to a second polarity of the first driving voltage, and the first polarity is opposite to the second polarity.

In this implementation, the first polarity is opposite to the second polarity, so that a liquid crystal ion aggregation effect can be avoided, and it can be ensured that the liquid crystal has a long service life.

According to the first aspect, in an optional implementation, inserting the M target subframes into the first frame to obtain the second frame includes: inserting one target subframe between the first subframe and the second subframe.

According to this implementation, the target subframe can be inserted into the first frame at a high frequency, so that when the over-saturation voltage drives the target pixel, it can be ensured that the maximum luminance value emitted by each pixel of the image modulator is basically not lost, thereby effectively increasing the maximum luminance value emitted by the image modulator.

According to the first aspect, in an optional implementation, the M target subframes include a first target subframe and a second target subframe adjacent in time, the first target subframe corresponds to a third polarity of the second driving voltage, the second target subframe corresponds to a fourth polarity of the second driving voltage, and the third polarity is opposite to the fourth polarity.

In this implementation, the third polarity is opposite to the fourth polarity, so that a liquid crystal ion aggregation effect can be avoided, and it can be ensured that the liquid crystal has a long service life.

According to the first aspect, in an optional implementation, inserting the M target subframes into the first frame to obtain the second frame includes: inserting the M target subframes into the first frame, where K subframes are spaced between any two target subframes adjacent in time, and K is any integer greater than 1.

In this implementation, it is ensured that a plurality of target subframes are inserted into the first frame in a uniform manner, and the maximum luminance value emitted by the image modulator is ensured.

According to the first aspect, in an optional implementation, inserting the M target subframes into the first frame to obtain the second frame includes: randomly inserting the target subframe between two subframes adjacent in time in the N subframes.

In this implementation, the target subframe may be randomly inserted into the first frame based on a requirement, thereby improving efficiency of obtaining the second frame.

According to the first aspect, in an optional implementation, inserting the M target subframes into the first frame to obtain the second frame includes: inserting at least one target subframe into an imaging subframe, where the imaging subframe is each of the N subframes, or the imaging subframe is some of the N subframes.

That the part of the subframe is spaced between the two adjacent target subframes includes: A part of the imaging subframe is spaced between two adjacent target subframes.

According to this implementation, the target subframe can be inserted into the first frame at a high frequency, so that when the over-saturation voltage drives the target pixel, it can be ensured that the maximum luminance value emitted by each pixel of the image modulator is basically not lost, thereby effectively increasing the maximum luminance value emitted by the image modulator.

According to a second aspect, an embodiment of this application provides an image modulation method, where the method is applied to an image modulation module, the image modulation module includes a pixel array and a controller, the pixel array includes a plurality of pixels, and the method includes: The controller obtains a first frame corresponding to a target pixel, where the target pixel is one of the plurality of pixels, the first frame corresponds to a first driving voltage, the first driving voltage corresponds to a first bit value, and the first driving voltage is an over-saturation voltage at which the target pixel modulates a light beam; the controller inserts M target subframes into the first frame to obtain a second frame, where M is any integer greater than 1, the target subframe corresponds to a second driving voltage, the second driving voltage corresponds to a second bit value, and in the M target subframes, a subframe of the first frame is spaced between any two adjacent target subframes, or a part of the subframe is spaced between any two adjacent target subframes; the controller drives the target pixel by using the second frame; and the pixel array receives a target light beam, where the target pixel to which the second frame is applied modulates the target light beam to emit the modulated light beam, where the modulated light beam is used for projection imaging. For descriptions of beneficial effects of this aspect, refer to the descriptions shown in the first aspect. Details are not described again.

Based on the second aspect, in an optional implementation, after the controller obtains the first frame corresponding to the target pixel, the method further includes: The controller divides the first frame into N subframes, where N is any integer greater than 1, the N subframes include a first subframe and a second subframe adjacent in time, the first subframe corresponds to a first polarity of a first driving voltage, the second subframe corresponds to a second polarity of the first driving voltage, and the first polarity is opposite to the second polarity.

Based on the second aspect, in an optional implementation, the controller inserts the M target subframes into the first frame to obtain the second frame includes: The controller inserts one target subframe between the first subframe and the second subframe.

According to the second aspect, in an optional implementation, the M target subframes include a first target subframe and a second target subframe adjacent in time, the first target subframe corresponds to a third polarity of the second driving voltage, the second target subframe corresponds to a fourth polarity of the second driving voltage, and the third polarity is opposite to the fourth polarity.

Based on the second aspect, in an optional implementation, inserting the M target subframes into the first frame to obtain the second frame includes:
inserting the M target subframes into the first frame, where K subframes are spaced between any two target subframes adjacent in time, and K is any integer greater than 1.

Based on the second aspect, in an optional implementation, inserting the M target subframes into the first frame to obtain the second frame includes:
randomly inserting the target subframe between two subframes adjacent in time in the N subframes.

Based on the second aspect, in an optional implementation, inserting the M target subframes into the first frame to obtain the second frame includes:
inserting at least one target subframe into an imaging subframe, where the imaging subframe is each of the N subframes, or the imaging subframe is some of the N subframes.

According to a third aspect, an embodiment of this application provides a chip, including a communication interface and a controller connected to the communication interface. The communication interface is configured to input and/or output signaling or data. The controller is configured to execute a computer executable program, so that the method according to any one of the first aspect is performed.

According to a fourth aspect, an embodiment of this application provides a projection system, including a light source, a polarization conversion module, a lens, a controller, and a pixel array, where the controller and the pixel array are configured to perform the method according to any one of the second aspect; the light source is configured to transmit an input light beam to the polarization conversion module; the polarization conversion module is configured to convert a polarization state of the input light beam to obtain the target light beam; and
the lens is configured to receive the modulated light beam from the pixel array, and emit an imaging light beam based on the modulated light beam, where the imaging light beam is used for projection imaging. For descriptions of beneficial effects of this aspect, refer to the descriptions shown in the first aspect. Details are not described again.

According to a fifth aspect, an embodiment of this application provides a head-up display system, including an optical deflection module and the projection system according to the fourth aspect, where the projection system is configured to transmit the imaging light beam to the optical deflection module; and the optical deflection module is configured to transmit the amplified imaging light beam to a windshield, where the imaging light beam forms a virtual image through the windshield.

According to a sixth aspect, an embodiment of this application provides a vehicle lamp, including a fastening base and the projection system according to the fourth aspect, where the fastening base is configured to fasten the projection system to a vehicle.

According to a seventh aspect, an embodiment of this application provides a vehicle, including a vehicle body and a windshield, where the vehicle further includes the head-up display system according to the fifth aspect and/or includes the vehicle lamp according to the sixth aspect; a controller is configured to obtain vehicle driving related information; and the controller is further configured to drive a pixel array to modulate the vehicle driving related information onto a target light beam to obtain the modulated light beam.

According to an eighth aspect, an embodiment of this application provides smart glasses, where the smart glasses include a frame, a lens, a light source, a controller, and a pixel array, the controller and the pixel array are configured to perform the method according to any one of the second aspect, the frame is configured to fasten the lens, the light source, the controller, and the pixel array, the light source is configured to transmit the input light beam to the pixel array, and the lens is configured to receive the modulated light beam from the pixel array and perform projection imaging on the modulated light beam.

According to a ninth aspect, an embodiment of this application provides a computer-readable storage medium. The computer-readable storage medium stores computer-executable instructions. When the computer-executable instructions are invoked by a computer, the method according to any one of the first aspect is performed.

### BRIEF DESCRIPTION OF DRAWINGS

FIG. 1 is an example diagram of a structure of a first embodiment of a projection system according to this application;
FIG. 2 is an example diagram of a structure of an embodiment of an LCOS according to this application;
FIG. 3 is an example diagram of a VR curve of an LCOS according to this application;
FIG. 4 is a step flowchart of an embodiment of a driving method according to this application; and
FIG. 5 is an example diagram of a plurality of target image subframes;
FIG. 6 is an example diagram of a dark-state subframe;
FIG. 7 is an example diagram of a first frame;
FIG. 8 is a first example diagram of a second frame according to this application;
FIG. 9 is an example diagram of a liquid crystal state under different driving voltages according to this application;
FIG. 10 is a second example diagram of a second frame according to this application;
FIG. 11 is an example diagram of comparison of luminance emitted by an LCOS;
FIG. 12 is a third example diagram of a second frame according to this application;
FIG. 13 is an example diagram of a VR curve of a target pixel according to this application;
FIG. 14 is an example diagram of a gamma curve of a target pixel;
FIG. 15 is a step flowchart of an embodiment of an image modulation method according to this application;
FIG. 16 is an example diagram of a structure of a second embodiment of a projection system according to this application;
FIG. 17 is an example diagram of a structure of an embodiment of a chip according to this application;
FIG. 18 is an example diagram of a structure of an embodiment of a head-up display system according to this application;
FIG. 19 is an example diagram of a structure of an embodiment of a projection vehicle lamp according to this application; and
FIG. 20 is a functional block diagram of an embodiment of a vehicle according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by a person skilled in the art based on embodiments of this application without creative efforts shall fall within the protection scope of this application.

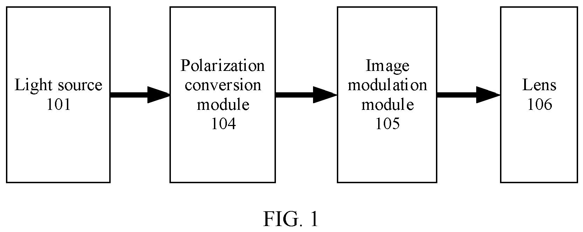

An embodiment of this application provides a projection system. The projection system shown in this embodiment may be applied to a portable projector, a home theater, a commercial projection (for example, a light show or a concert), an outdoor projection, a conference presentation, a classroom presentation, a cinema projection, an intelligent gesture interaction projection, a head-up display (head-up display, HUD), an augmented reality head-up display system (augmented reality head-up display, AR-HUD), AR glasses, virtual reality (virtual reality, VR) glasses, and the like. This is not specifically limited. FIG. 1 is an example diagram of a structure of a first embodiment of a projection system according to this application. The projection system includes a light source 101, a polarization conversion module 104, an image modulation module 105, and a lens 106.

The light source 101 shown in this embodiment is configured to emit an input light beam. The input light beam is white light, and the white light may also be referred to as white-color light, achromatic light (achromatic light), or colorless light. The input light beam is a result obtained by mixing a plurality of types of colored light based on a specific proportion. The light source 101 may be an incandescent lamp (for example, a halogen lamp), a gas discharge lamp (for example, a high-pressure mercury lamp and a xenon lamp), a metal halogen lamp, a fluorescent lamp, or the like. A light beam processing system may be further included between the light source 101 and the polarization conversion module 104. For example, the light beam processing system includes a homogenizing device configured to homogenize the input light beam. For example, the homogenizing device may be a compound-eye lens, a freeform surface lens, or a homogenizing rod. The light beam processing system further includes a lens group, and the lens group is configured to collimate the input light beam until the polarization conversion module 104. A color filter wheel may be further included between the light source 101 and the polarization conversion module 104 shown in this embodiment. The color filter wheel can rotate. The color filter wheel has been coated with blue, green and red coatings. In a first time period, the blue coating of the color filter wheel is rotated to a transmission optical path of the white light. In this case, only the blue light beam can be transmitted to the polarization conversion module 104 through the color filter wheel. In a second time period, the green coating of the color filter wheel is rotated to a transmission optical path of the white light. In this case, only the green light beam can be transmitted to the polarization conversion module 104 through the color filter wheel. In a third time period, the red coating of the color filter wheel is rotated to a transmission optical path of the white light. In this case, only the red light beam can be transmitted to the polarization conversion module 104 through the color filter wheel. An intersection of any two of the first time period, the second time period, and the third time period that are shown in this embodiment on a time axis is null. It may be understood that the polarization conversion module 104 receives the blue light beam, the green light beam, and the red light beam in a time division manner.

In the foregoing example, the light emitted by the light source 101 is the white light. In another example, the light source 101 may alternatively be a laser array or a transmitter based on a light-emitting diode (light-emitting diode, LED). The laser array may include one or more lasers, and the laser may be a laser diode (laser diode, LD), a vertical cavity surface emitting laser (vertical cavity surface emitting laser, VCSEL), a Fabry-Perot laser, or the like. In this case, the input light beam emitted by the light source 101 is a laser light beam. Optionally, a light combining module may be included between the light source 101 and the polarization conversion module 104. The light combining module is configured to combine input light beams, and transmit a combined input light beam to the polarization conversion module 104.

In this example, the polarization conversion module 104 is a polarization beam splitter (polarization beam splitter, PBS). The polarization conversion module 104 splits the blue light beam to obtain s-polarized light (light whose polarization direction is perpendicular to an incident plane) and p-polarized light (light whose polarization direction is parallel to the incident plane). Only the S-polarized light is reflected by the polarization conversion module 104 to the image modulation module 105. The image modulation module 105 performs image modulation on a blue S-polarized light to output a first modulated light beam. Similarly, the image modulation module 105 performs image modulation on a green S-polarized light from the polarization conversion module 104 to output a second modulated light beam, and the image modulation module 105 performs image modulation on a red S-polarized light from the polarization conversion module 104 to output a third modulated light beam. Each image modulation module shown in this embodiment may be an image modulation module of any type that performs image modulation based on liquid crystal included in the LCOS or a liquid crystal display (liquid crystal display, LCD). Because the image modulation module 105 receives the blue light beam, the green light beam, and the red light beam in a time division manner, the image modulation module 105 transmits the first modulated light beam in blue, the second modulated light beam in green, and the third modulated light beam in red to the lens in a time division manner.

The lens 106 receives the first modulated light beam in blue, the second modulated light beam in green, and the third modulated light beam in red, and the lens 106 separately performs imaging on the first modulated light beam in blue, the second modulated light beam in green, and the third modulated light beam in red, to output imaged light beams. The imaging light beams specifically include a first imaging light beam in blue, a second imaging light beam in green, and a third imaging light beam in red. The first imaging light beam in blue, the second imaging light beam in green, and the third imaging light beam in red are emitted by the lens 106 in a time division manner. A switching time between the first imaging light beam, the second imaging light beam, and the third imaging light beam is short. Because of an integral effect of human eyes, a person subjectively considers that red, green, and blue colors are modulated at the same time, and further observes a color image. The lens 106 includes one or more lenses. The lens separately forms an enlarged real image for the first modulated light beam in blue, the second modulated light beam in green, and the third modulated light beam in red. The lens may be a convex lens or a concave lens. Optionally, the projection system shown in this embodiment may further include a projection screen. In this case, real images corresponding to the first imaging light beam, the second imaging light beam, and the third imaging light beam that are emitted by the lens 106 can be displayed on the projection screen.

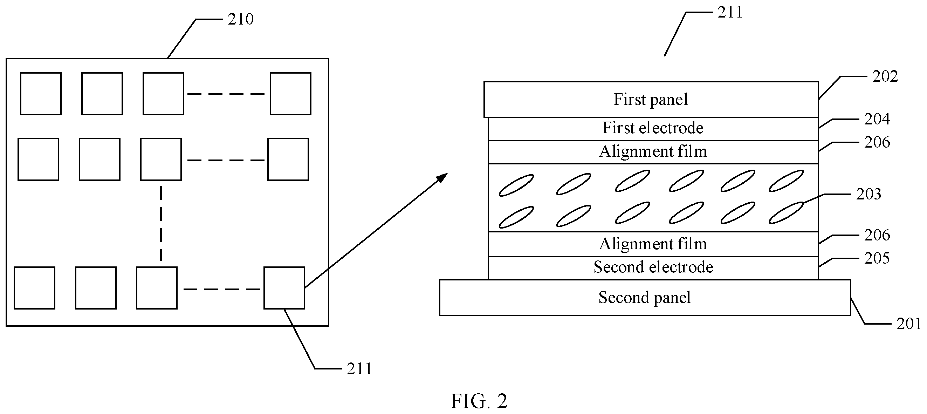

The projection system shown in this example further includes a controller connected to each image modulation module. The controller is configured to control a voltage applied to each image modulation module. The controller may be implemented by one or more chips or one or more integrated circuits. For another example, the controller may be one or more of an optical digital signal processor (optical digital signal processor, oDSP), a field-programmable gate array (field-programmable gate array, FPGA), an application-specific integrated circuit (application-specific integrated circuit, ASIC), a system on chip (system on chip, SoC), a central processing unit (central processor unit, CPU), a network processor (network processor, NP), a microcontroller unit (microcontroller unit, MCU), a programmable logic device (programmable logic device, PLD), a network interface card chip, a storage interface chip, or another integrated chip. Details are not described. In this embodiment, each image modulation module is an LCOS as an example. The LCOS has advantages such as a small pixel size, a small pixel spacing, and a high background reflectivity, is widely used in the projection display field, and has features such as high resolution, high contrast, and high luminance. FIG. 2 is an example diagram of a structure of an embodiment of an LCOS according to this application. A left side of FIG. 2 is an example diagram of a top-view structure of a pixel array 210 included in the LCOS. The pixel array 210 specifically includes a plurality of pixels. Each pixel supports independent adjustment, and controls a liquid crystal phase of the pixel. In other words, a phase modulation amount for modulating a light beam by the pixel is adjustable. A right side of FIG. 2 is an example diagram of a side-view structure of any pixel 211 included in the pixel array 210. The pixel 211 includes a second panel 201, a first panel 202, a liquid crystal layer 203, a drive circuit (not shown in FIG. 2), and two layers of alignment films (Alignment Films) 206. The second panel 201 and the first panel 202 are disposed opposite to each other. The second panel 201 is parallel to the first panel 202. The second panel 201 may be a silicon backplane (silicon backplane), and the first panel 202 may be a translucent glass substrate (glass substrate). The liquid crystal layer 203 is located between the second panel 202 and the second panel 201, and includes many liquid crystals. The liquid crystals deflect when a voltage is loaded at an electrode layer. The drive circuit is configured to generate an electric field to control deflection of the liquid crystals in the liquid crystal layer 203. The two layers of alignment films 206 are respectively located on two opposite sides of the liquid crystal layer 203. One alignment film 206 in the two layers of alignment films 206 is located between the liquid crystal layer 203 and the second panel 201, and the other alignment film 206 is located between the liquid crystal layer 203 and the first panel 202. The alignment film 206 is configured to enable the liquid crystals in the liquid crystal layer 203 to have an initial orientation. Specifically, the drive circuit includes a second electrode 205 and a first electrode 204. The second electrode 205 is located between the liquid crystal layer 203 and the second panel 201. The first electrode 204 is located between the liquid crystal layer 203 and the first panel 202. The two alignment films 206 are located between the second electrode 205 and the first electrode 204. When the second electrode 205 and the first electrode 204 are powered on, the liquid crystals in the liquid crystal layer 203 are controlled to deflect. In this embodiment, an example in which the first electrode 204 is an indium tin oxide (Indium tin oxide, ITO) transparent electrode and the second electrode 205 is a pixel electrode (pixel electrode) is used.

A first voltage is applied to the first electrode 204, and a second voltage is applied to the second electrode 205. If absolute values of differences between the first voltage and the second voltage are different, different electric fields are formed between the first electrode 204 and the second electrode 205. When the liquid crystal layer 203 is under action of different electric fields, the liquid crystals included in the liquid crystal layer 203 are deflected at different angles. Because the liquid crystal is a birefringent material, the liquid crystal deflection brings a change in an equivalent birefringence, thereby implementing phase modulation amounts of different degrees on the received light beam.

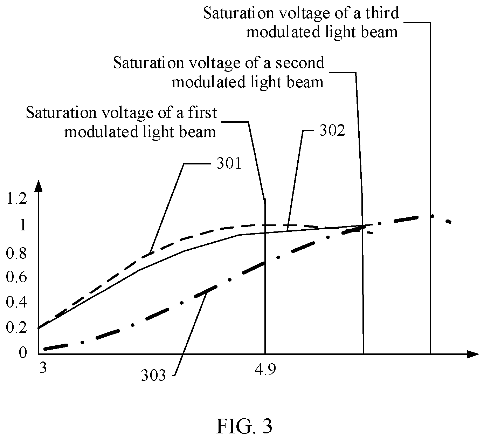

FIG. 3 is an example diagram of a VR curve of an LCOS according to this application. Specifically, the coordinate system shown in FIG. 3 includes a first curve 301, a second curve 302, and a third curve 303. A vertical coordinate of the coordinate system shown in FIG. 3 is a normalized reflectivity of the LCOS. A larger normalized reflectivity of the LCOS indicates higher luminance emitted by the LCOS. A horizontal coordinate shown in FIG. 3 is a difference between driving voltages, where the difference between the driving voltages is an absolute value of a difference between a first voltage applied to a first electrode and a second voltage applied to a second electrode. The first curve 301 shows luminance of a first modulated light beam that is emitted by the LCOS and that is blue, and changes with a difference between driving voltages of the LCOS from small to large. The second curve 302 shows luminance of a second modulated light beam that is emitted by the LCOS and that is green, and changes with the difference between the driving voltages of the LCOS from small to large. The third curve 303 shows luminance of a third modulated light beam that is emitted by the LCOS and that is red, and changes with the difference between the driving voltages of the LCOS from small to large. It can be learned by comparing the first curve 301, the second curve 302, and the third curve 303 that, as the difference between the driving voltages of the LCOS increases, the normalized reflectivity also increases, and the luminance of the modulated light beam emitted by the LCOS is also higher. However, when the difference between the driving voltages reaches a specific value, the luminance emitted by the LCOS reaches a maximum. If the difference between the driving voltages continuously increases, the luminance emitted by the LCOS decreases. The difference that is between the driving voltages and that makes the luminance emitted by the LCOS reach the maximum is referred to as a saturation voltage. A voltage smaller than the saturation voltage is referred to as an under-saturation voltage, and a voltage greater than the saturation voltage is referred to as an over-saturation voltage. Saturation voltages vary with different wavelengths. A shorter wavelength indicates a smaller saturation voltage. For example, for the first curve 301 in blue, when the difference between the driving voltages is 4.9 V, the luminance of the first modulated light beam emitted by the LCOS is the maximum. When the difference between the driving voltages is greater than 4.9 V, the luminance of the first modulated light beam emitted by the LCOS decreases. Therefore, for the first modulated light beam, if the difference between the driving voltages is 4.9 V, the voltage is a saturation voltage. If the difference between the driving voltages is less than 4.9 V, the voltage is an under-saturation voltage. If the difference between the driving voltages is greater than 4.9 V, the voltage is an over-saturation voltage. A saturation voltage of the second curve 302 in green is greater than the saturation voltage of the first curve 301 in blue, and a saturation voltage of the third curve 303 in red is greater than the saturation voltage of the second curve 302 in green.

Because the liquid crystal layer 203 has an over-saturation phenomenon, and light saturation points of different wavelengths are different, if the same driving voltage (that is, the absolute value of the difference between the first voltage and the second voltage) is applied to the liquid crystal layer 203, and a green channel is at the saturation voltage, a red channel is at the under-saturation voltage and a blue channel is at the over-saturation voltage. Both the under-saturation and the over-saturation cause luminance loss, and reduce use efficiency of the LCOS.

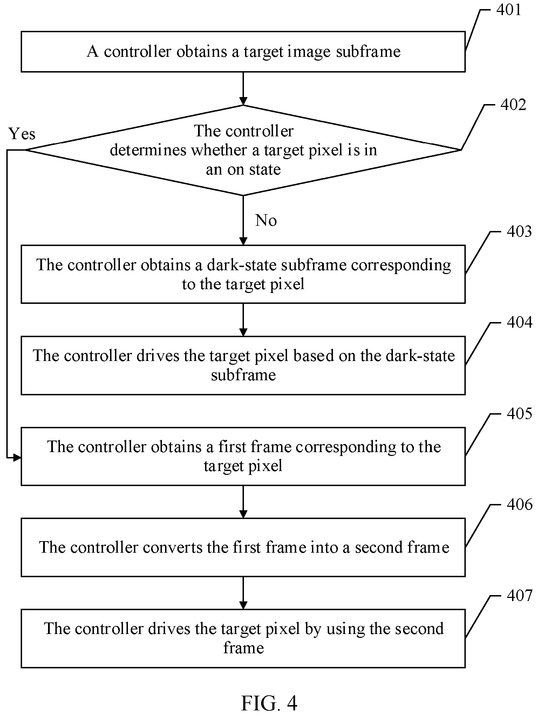

An embodiment of this application provides a driving method. The driving method shown in this embodiment is used to apply a voltage to an LCOS, so that the LCOS can modulate a received light beam, to emit a modulated light beam. According to the method in this embodiment, when it is ensured that the luminance emitted by the image modulation module is basically not lost, VR feature stability and DC balance performance can be further ensured, and a service life of the image modulation module can be improved. FIG. 4 is a step flowchart of an embodiment of a driving method according to this application.

Step 401: A controller obtains a target image subframe.

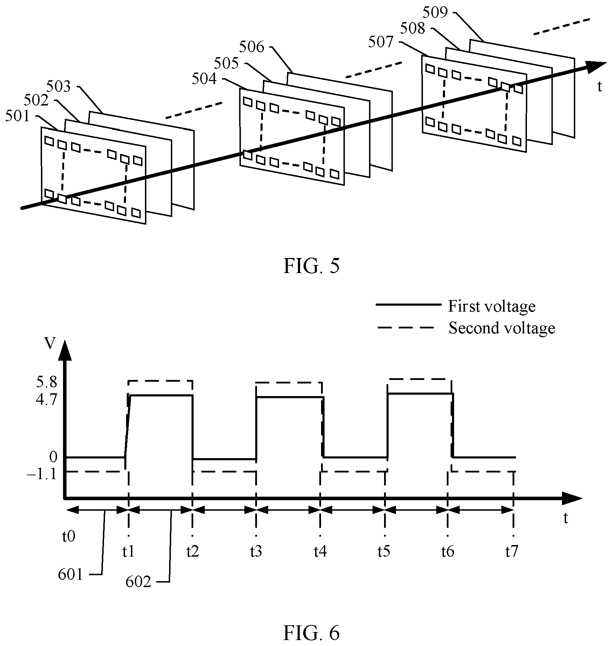

The controller shown in this embodiment may be a component inside an LCOS, or may be disposed outside an LCOS. This is not specifically limited, provided that the controller can apply a voltage to the LCOS. FIG. 5 is an example diagram of a plurality of image subframes. To implement image modulation of an LCOS, the controller obtains image frames from an image source, where the image frames include a plurality of image subframes sequentially arranged on a time axis. For example, the controller shown in FIG. 5 converts one image frame into an image subframe 501, an image subframe 502, and an image subframe 503 that are sequentially arranged at time t. By analogy, an image subframe 504, an image subframe 505, and an image subframe 506 are sequentially arranged. By analogy, an image subframe 507, an image subframe 508, and an image subframe 509 are arranged. The image subframe 501, the image subframe 502, the image subframe 503, and the like are used to modulate a red light beam. The image subframe 504, the image subframe 505, the image subframe 506, and the like are used to modulate a blue light beam. The image subframe 507, the image subframe 508, and the image subframe 509 are used to modulate a green light beam. The image source may be a video or a picture. For example, if the controller is located in the LCOS, the LCOS includes an external interface. The controller receives the image source from any electronic device through the external interface. The external interface is connected to the electronic device. The external interface may be an external bus interface, a front-side bus, a display interface, a video display interface, a graphics interface, or the like. The video display interface may be a digital video interface (digital visual interface, DVI), a high-definition multimedia interface (high-definition multimedia interface, HDMI), a video graphics array (video graphics array, VGA), or the like. Optionally, the LCOS may include an internal interface. A memory of the LCOS is connected to the controller through the internal interface. The controller receives the image source from the memory through the internal interface. The internal interface may be a bus, a local input/output (input/output, I/O) port bus, a hub interface bus, or the like.

The target image subframe shown in this embodiment may be any image subframe in the plurality of image subframes obtained by the controller, as shown in FIG. 5.

Step 402: The controller determines whether a target pixel is in an on state. If the target pixel is not in the on state, step 403 is performed; or if the target pixel is in the on state, step 405 is performed.

The target pixel shown in this embodiment is any pixel in the plurality of pixels included in the pixel array of the LCOS. For example, the target pixel may be the pixel 211 shown in FIG. 2. The controller drives the pixel in a digital driving manner, for example, a PWM manner. Therefore, the controller obtains, based on the target image subframe, a bit corresponding to the target pixel. For example, when the controller determines that the target image subframe is the image subframe 501, the controller determines that the bit corresponding to the target pixel is 0 when the image subframe 501 is modulated. This indicates that the target pixel is in an off state corresponding to a second bit value. When the controller determines that the target pixel corresponds to the second bit value, the controller applies a voltage to the target pixel based on the second bit value, so that the target pixel is in the off state. The controller determines that the bit corresponding to the target pixel is 1 when the image subframe 501 is modulated. This indicates that the target pixel is in an on state corresponding to the first bit value. When the controller determines that the target pixel corresponds to the first bit value, the controller applies a voltage to the target pixel based on the first bit value, so that the target pixel is in the on state. In this embodiment, an example in which the first bit value is a bit 1 is used. This is not specifically limited. In this embodiment, an example in which the second bit value is a bit 0 is used. This is not specifically limited.

For example, when the controller determines that the target image subframe is the image subframe 501, the LCOS includes P pixels, and the controller divides the image subframe 501 into P regions. Specifically, for example, each of the P regions may be one pixel. The P regions in the image subframe 501 are in a one-to-one correspondence with the P pixels included in the LCOS. Specifically, the controller obtains the target region included in the image subframe 501, where the target region is a region that is in the P regions and that corresponds to the target pixel of the LCOS. The controller determines the status of the target pixel based on the target region. The target pixel has two states: an on state and an off state. If projection imaging is not performed on the target region, it is determined that the bit corresponding to the target pixel is 0. Therefore, the target pixel is in the off state. The off state means that liquid crystal included in the target pixel does not deflect. Therefore, with reference to FIG. 1, the target pixel of the LCOS does not emit a light beam to the lens. If projection imaging is performed on the target region, it is determined that the bit corresponding to the target pixel is 1. Therefore, the target pixel is in the on state. The on state means that the liquid crystal included in the target pixel deflects, so that a phase difference of a light beam passing through the target pixel is changed. In this case, the target pixel modulates the light beam by controlling a phase of the light beam. Therefore, with reference to FIG. 1, the modulated light beam emitted by the target pixel is transmitted to the lens.

Step 403: The controller obtains a dark-state subframe corresponding to the target pixel.

If the controller determines that the target pixel is in the off state, the controller obtains the dark-state subframe corresponding to the off state. In this case, the controller applies a voltage to the target pixel based on the dark-state subframe, so that the target pixel is in the off state. For description of the dark-state subframe, refer to FIG. 6. FIG. 6 is an example diagram of the dark-state subframe. When the controller drives the target pixel by using the dark-state subframe, the target pixel is in the off state. The dark-state subframe includes a correspondence between a first voltage and time, and the dark-state subframe further includes a correspondence between a second voltage and time. The first voltage is a voltage applied by the controller to a first electrode of the target pixel, and the second voltage is a voltage applied by the controller to a second electrode of the target pixel. In this embodiment, when the controller drives the target pixel by using the dark-state subframe, the controller applies a driving voltage to the target pixel, where the driving voltage is an absolute value of a difference between the first voltage and the second voltage. A magnitude of the driving voltage is not limited in this embodiment, provided that the target pixel is in the off state when the driving voltage is applied to the target pixel. For example, the driving voltage may be 0, and in this embodiment, an example in which the driving voltage is 1.1 V is used.

With reference to FIG. 5 and FIG. 6, if the target pixel corresponding to the image subframe 501 is in the off state, the dark-state subframe is a dark-state subframe 601 shown in FIG. 6. Duration of the dark-state subframe 601 is from t0 to t1. It should be noted that the duration of the dark-state subframe 601 is not limited in this embodiment. In the dark-state subframe 601, the first voltage is 0 V, and the second voltage is -1.1 V. In this case, when modulating the image subframe 501, the controller applies 0 V to the first electrode and -1.1 V to the second electrode. Therefore, the driving voltage corresponding to the dark-state subframe 601 is |0-(-1.1)|=1.1. By analogy, if the target pixel corresponding to the image subframe 502 is in the off state, the dark-state subframe is the dark-state subframe 602 shown in FIG. 6. Duration of the dark-state subframe 602 is from t1 to t2. It should be noted that the duration of the dark-state subframe 602 is not limited in this embodiment. In the dark-state subframe 602, the first voltage is 4.7 V, and the second voltage is 5.8 V. In this case, when modulating the image subframe 502, the controller applies 4.7 V to the first electrode and 5.8 V to the second electrode. Therefore, a driving voltage corresponding to the second dark-state subframe 602 is |4.7-5.8|=1.1.

In this embodiment, to avoid a liquid crystal ion aggregation effect and ensure that the liquid crystal has a long service life, a polarity of a liquid crystal drive electric field, that is, a positive or negative polarity of a liquid crystal driving voltage, needs to be periodically reversed, so that the driving voltage of the target pixel is periodically reversed, thereby effectively improving the service life of the liquid crystal. For example, the controller obtains two adjacent image subframes along the time axis, that is, the image subframe 501 and the image subframe 502. In addition, target pixels corresponding to the image subframe 501 and the image subframe 502 are both in the off state. In this case, a polarity of the dark-state subframe 601 corresponding to the image subframe 501 is opposite to a polarity of the dark-state subframe 602 corresponding to the image subframe 502. Still refer to FIG. 6. A difference between the first voltage and the second voltage of the dark-state subframe 601 is a positive value. As shown in FIG. 6, the difference between the first voltage and the second voltage of the dark-state subframe 601 is 0-(-1.1)=1.1. However, a difference between the first voltage and the second voltage of the adjacent dark-state subframe 602 is a negative value. As shown in FIG. 6, the difference between the first voltage and the second voltage of the dark-state subframe 602 is 4.7-5.8=-1.1. Because polarities of applied driving voltages are opposite between two adjacent dark-state subframes, a service life of the liquid crystal is effectively improved.

Step 404: The controller drives the target pixel based on the dark-state subframe.

For example, as shown in FIG. 6, if the target image subframe is the image subframe 501, and the controller obtains the corresponding dark-state subframe 601 based on the target pixel of the target image subframe 501, the controller does not apply power to the first electrode within the duration from the moment t0 to the moment t1, and applies a voltage of -1.1 V to the second electrode. It may be understood that, within the duration of the dark-state subframe 601, the target pixel is always in the off state.

Step 405: The controller obtains a first frame corresponding to the target pixel.

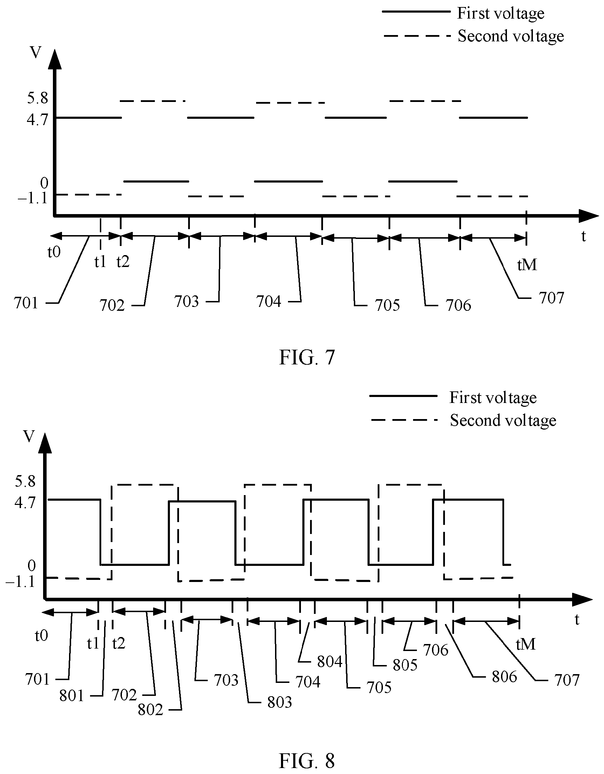

The controller is configured to apply a voltage to the target pixel based on the first frame, so that the target pixel is in the on state. For a description of the first frame, refer to FIG. 7. FIG. 7 is an example diagram of the first frame. When the controller drives the target pixel by using the first frame, the target pixel is in the on state. The first frame includes the correspondence between the first voltage and time, and the first frame further includes the correspondence between the second voltage and time. For descriptions of the first voltage and the second voltage, refer to step 403. Details are not described again. In this embodiment, when the controller drives the target pixel by using the first frame, the controller applies the first driving voltage to the target pixel. It can be learned from the foregoing description that the first driving voltage corresponds to the bit 1 to enable the target pixel to be in the on state. A magnitude of the first driving voltage is not limited in this embodiment, provided that the target pixel is in the on state when the first driving voltage is applied to the target pixel. For example, the first driving voltage may be 4.9 V.

In this embodiment, the first frame corresponding to the bit 1 includes N subframes, where N is any integer greater than 1. A specific value of N is not limited in this embodiment. The duration of the first frame is not limited in this embodiment. For example, duration of the N subframes is from t0 to tM. In the example shown in FIG. 7, for example, N is 7. In this case, the first frame includes seven subframes, that is, a first subframe 701, a second subframe 702, a third subframe 703, a fourth subframe 704, a fifth subframe 705, a sixth subframe 706, and a seventh subframe 707. In this example, that the first driving voltage corresponding to each subframe is 4.9 V is used as an example. For example, in the first subframe 701, the first voltage is 4.7 V, and the second voltage is -1.1 V. Therefore, the first driving voltage corresponding to the first subframe 701 is |4.7-(-1.1)|=5.8. In the second subframe 702, the first voltage is 0 V, and the second voltage is 5.8 V. Therefore, the first driving voltage corresponding to the second subframe 702 is |0-5.8|=5.8.

In this embodiment, to avoid a liquid crystal ion aggregation effect and ensure that the liquid crystal has a long service life, a polarity of a liquid crystal drive electric field, that is, a positive or negative polarity of a liquid crystal driving voltage, needs to be periodically reversed, so that the driving voltage of the target pixel is periodically reversed, thereby effectively improving the service life of the liquid crystal. That is, in the first frame, polarities of two adjacent subframes are opposite. For example, the first polarity of the first subframe 701 is positive (that is, the difference between the first voltage and the second voltage of the first subframe 701 is a positive value), but the second polarity of the adjacent second subframe 702 is negative (that is, the difference between the first voltage and the second voltage of the second subframe 702 is a negative value). As shown in FIG. 7, the difference between the first voltage and the second voltage of the first subframe 701 is 4.7-(-1.1)=5.8, and the difference between the first voltage and the second voltage of the second subframe 702 is 0-5.8=-5.8. It may be understood that, in the first frame shown in this embodiment, absolute values of first driving voltages of different subframes are all 5.8 V, so that when the controller drives the target pixel based on each subframe, the first driving voltage of 5.8 V can be applied to the target pixel. In addition, polarities of the applied first driving voltages are opposite between two adjacent subframes (for example, the first subframe 701 and the second subframe 702), thereby effectively improving a service life of the liquid crystal.

The first driving voltage shown in this embodiment is an over-saturation voltage at which the target pixel modulates the light beam. For description of the over-saturation voltage, refer to the description corresponding to FIG. 3. Details are not described again. It can be learned from FIG. 3 that, when an over-saturation voltage is applied to the target pixel, luminance emitted by the target pixel decreases. By using the steps shown in the following in this embodiment, when an over-saturation voltage is applied to the target pixel, it can be ensured that luminance emitted by the target pixel is not lost or almost not lost, thereby improving luminance emitted by the target pixel.

Step 406: The controller converts the first frame into a second frame.

It can be learned from step 405 that, if the controller drives the target pixel based on the first frame, the target pixel does not emit the modulated light beam at maximum luminance. Therefore, in this embodiment, the controller converts the first frame into the second frame. In this case, if the controller drives the target pixel based on the second frame, the target pixel emits the modulated light beam at the maximum luminance. Specifically, the controller inserts M target subframes into the first frame to obtain the second frame, where M is any integer greater than 1, the target subframe corresponds to a second driving voltage, the second driving voltage corresponds to a bit 0, and in the M target subframes, a part of the first frame is spaced between any two adjacent target subframes. In this embodiment, the first frame may be converted into the second frame in a plurality of optional manners. Details are specifically described as follows:

### Optional implementation 1

With reference to FIG. 7 and FIG. 8, FIG. 8 is a first example diagram of a second frame according to this application. In this example, in the N subframes included in the first frame, a target subframe is inserted between any two subframes adjacent in time. On the basis of FIG. 7, a first target subframe 801 is inserted between the first subframe 701 and the second subframe 702. A second target subframe 802 is inserted between the second subframe 702 and the third subframe 703. A third target subframe 803 is inserted between the third subframe 703 and the fourth subframe 704. A fourth target subframe 804 is inserted between the fourth subframe 704 and the fifth subframe 705. A fifth target subframe 805 is inserted between the fifth subframe 705 and the sixth subframe 706. A sixth target subframe 806 is inserted between the sixth subframe 706 and the seventh subframe 707. A specific insertion manner may be as follows: For example, the first subframe 701 and the second subframe 702 are used as an example, and a correspondence between time and a voltage of a part of the first subframe 701 close to the second subframe 702 is replaced with the first target subframe 801. For example, duration of the first subframe starts from a moment t0 and ends at a moment t2. A time period between a moment t1 and the moment t2 included in the first subframe is close to the second subframe 702. In this example, the controller replaces the time period between the moment t1 and the moment t2 included in the first subframe 701 with the first target subframe 801. For another example, the first subframe 701 and the second subframe 702 are used as an example. A correspondence between time and a voltage of a part of the second subframe 702 close to the first subframe 701 may be replaced with the first target subframe 801. For another example, the first subframe 701 and the second subframe 702 is used as an example, a correspondence between time and a voltage of the part of the first subframe 701 close to the second subframe 702 and a correspondence between time and a voltage of a part of the second subframe 702 close to the first subframe 701 are both replaced with the first target subframe 801.

Each target subframe shown in this embodiment respectively corresponds to the second driving voltage, and the second driving voltage corresponds to a bit 0. In this embodiment, that the second driving voltage is 1.1 V is used as an example. A magnitude of the second driving voltage is not limited in this embodiment, provided that the second driving voltage corresponds to the bit 0. For example, if the controller drives the target pixel based on the first target subframe 801, the controller does not apply power to the first electrode, and the second voltage applied to the second electrode is -1.1 V. Therefore, the second driving voltage=|0-(-1.1)|=1.1 V.

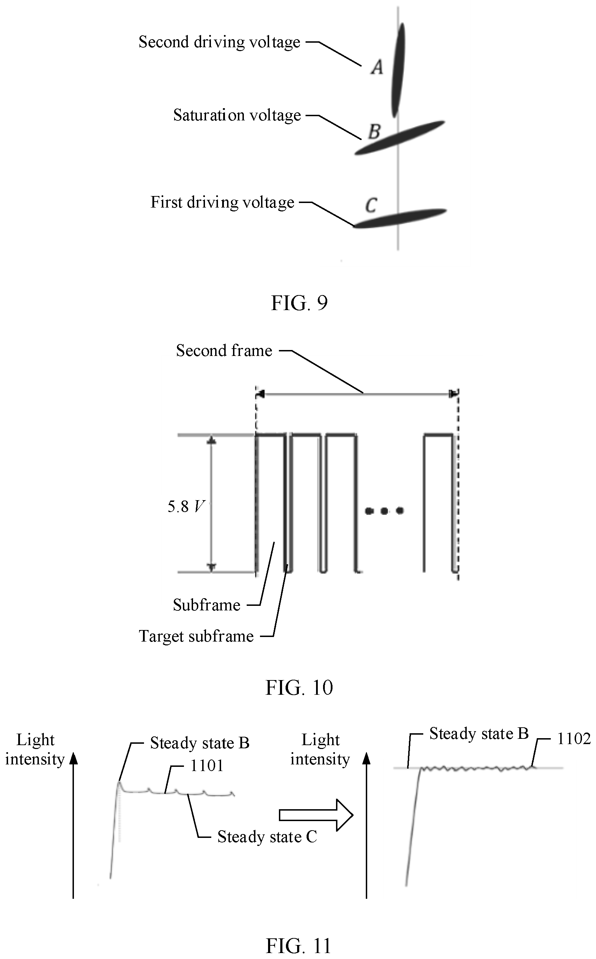

A function of converting the first frame into the second frame is described. FIG. 9 is an example diagram of a liquid crystal state under different driving voltages according to this application.

When a controller applies a second driving voltage (for example, 1.1 V) to a target pixel, liquid crystal of the target pixel is in a state A. When the controller applies a first driving voltage (for example, 5.8 V) to the target pixel, the liquid crystal of the target pixel is in a state C. The first driving voltage shown in this embodiment is an over-saturation voltage, and the second driving voltage is an under-saturation voltage. When the voltage applied to the target pixel is the second driving voltage, the liquid crystal is in a pretilt state. As the driving voltage increases, a deflection angle of the liquid crystal is larger. When the liquid crystal reaches a state B, a modulation amplitude reaches the maximum. The voltage is referred to as a saturation voltage, and a deflection state of the liquid crystal is referred to as a steady state B. In this example, a saturation voltage of the target pixel is 4.9 V. When the driving voltage further increases, for example, reaches an over-saturation voltage of 5.8, the deflection angle of the liquid crystal further increases, and the output modulated amplitude of the target pixel decreases. Therefore, luminance emitted by the target pixel also decreases. This over-saturation state is described as a state C. It may be understood that the steady state B is a state between the state A and the state C. If the liquid crystal is switched between the state A and the state C at a high frequency, the liquid crystal can be dynamically and stably maintained in the steady state B by using a sticky characteristic of the liquid crystal. According to the controller shown in this embodiment, if the target pixel is driven based on the second frame, the over-saturation voltage (namely, the second driving voltage) and the under-saturation voltage (namely, the first driving voltage) are switched at a high frequency and applied to the target pixel, so that the liquid crystal of the target pixel emits the modulated light beam in the steady state B, to ensure that the target pixel emits the modulated light beam with the maximum luminance.

With reference to FIG. 10 and FIG. 11, FIG. 10 is a second example diagram of a second frame according to this application. FIG. 11 is an example diagram of comparison of luminance emitted by an LCOS. In the second frame shown in FIG. 10, an example in which the target subframe is inserted into the first frame at a high frequency to obtain the second frame is used. In the second frame shown in FIG. 10, there is one target subframe between two adjacent subframes. In this example, the subframe corresponds to a bit 1, and the target subframe corresponds to a bit 0. In the example shown in FIG. 10, a duty cycle of 95% is used as an example. A waveform 1101 shown in FIG. 11 is an example in which the controller applies only an over-saturation voltage to the target pixel. It can be learned that the target pixel is always in the state C. Therefore, luminance emitted by the target pixel is always lower than luminance emitted when the target pixel is in the steady state B. The waveform 1102 shown in FIG. 11 is an example in which the controller applies the second frame shown above to the target pixel. It can be learned that the target pixel always slightly fluctuates near the steady state B. Therefore, the luminance emitted by the target pixel is always maximum luminance. According to this embodiment, even if the over-saturation voltage is applied to the target pixel, the luminance emitted by the target pixel is almost at a maximum value, thereby ensuring that the luminance emitted by the target pixel is basically not lost.

In this embodiment, in the M target subframes inserted into the first frame, polarities of second driving voltages corresponding to any two target subframes adjacent in time are opposite. For example, the M target subframes include a first target subframe and a second target subframe adjacent in time, the first target subframe corresponds to a third polarity of the second driving voltage, the second target subframe corresponds to a fourth polarity of the second driving voltage, and the third polarity is opposite to the fourth polarity. For a description that the third polarity is opposite to the fourth polarity, refer to the foregoing description that the first polarity is opposite to the second polarity. Details are not described again. Because the second driving voltage polarities corresponding to the two adjacent target subframes shown in this embodiment are opposite to each other, even if the target subframe is inserted into the first frame at a high frequency, DC balance is not damaged.

### Optional implementation 2

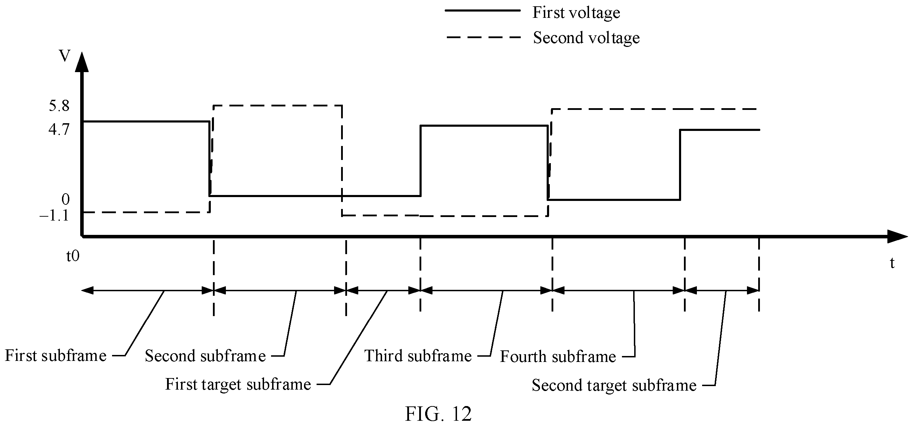

In this example, the second frame includes N subframes and M target subframes, and there are K subframes between any two target subframes adjacent in time, where K is any integer greater than 1. For example, FIG. 12 is a third example diagram of a second frame according to this application. In the example shown in FIG. 12, there are two subframes between any two adjacent target subframes. For example, the second subframe sequentially includes a first subframe, a second subframe, a third subframe, and a fourth subframe. By analogy, there is one first target subframe between the second subframe and the third subframe, and there is one second target subframe between the fourth subframe and the fifth subframe. It can be learned that, in the M target subframes shown in this embodiment, there are two subframes between any two target subframes adjacent in time. A value of K is not limited in this embodiment. It may be understood that the M target subframes in the second frame shown in this example are evenly distributed in the second frame. For descriptions of the target subframe and each subframe included in the first frame, and descriptions of inserting the target subframe, refer to the optional manner 1. Details are not described again.

### Optional implementation 3

In this example, the target subframe may be randomly inserted into two subframes adjacent in time in N subframes included in the first frame. For descriptions of the target subframe and each subframe included in the first frame, and descriptions of inserting the target subframe, refer to the optional manner 1. Details are not described again.

### Optional implementation 4

In the foregoing optional manner 1 and optional manner 3, for example, the target subframe is inserted between two subframes adjacent in time. In this optional manner, the target subframe may be inserted into a subframe. Specifically, the first frame includes an imaging subframe, and the imaging subframe is each of N subframes, or the imaging subframe is some of N subframes. The controller inserts at least one target subframe into the imaging subframe. If the controller inserts a plurality of target subframes into the imaging subframe, the controller inserts the target subframes into a same imaging subframe, and a part of imaging subframe is spaced between two adjacent target subframes. For descriptions of the target subframe and each subframe included in the first frame, and descriptions of inserting the target subframe, refer to the optional manner 1. Details are not described again.

Step 407: The controller drives the target pixel by using the second frame.

For example, the second frame is shown in the example in FIG. 8. In this case, in duration of the first subframe 701, a voltage of 4.7 V is applied to the first electrode, and a voltage of -1.1 V is applied to the second electrode. In duration of the first target subframe 801, no voltage is applied to the first electrode, and a voltage of - 1.1 V is applied to the second electrode, and so on. This is not specifically limited.

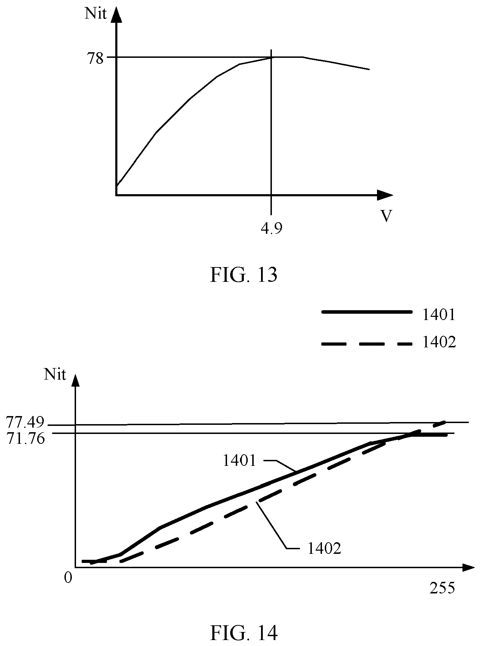

FIG. 13 is an example diagram of a VR curve of a target pixel according to this application. As shown in FIG. 13, it can be learned that a saturation voltage at which the target pixel modulates a light beam is 4.9 V. When the saturation voltage (that is, 4.9 V) is applied to the target pixel, luminance emitted by a target light beam is 78 nits (nits). That is, 78 nits is a maximum value of the luminance emitted by the target pixel.

FIG. 14 is an example diagram of a gamma curve of a target pixel. A horizontal coordinate of the gamma (Gamma) curve is a grayscale value ranging from 0 to 255. In a curve 1401 shown in FIG. 14, a maximum luminance value emitted by the target pixel is 71.76 nits when the target pixel is driven to emit light by using an over-saturation voltage. Therefore, a maximum luminance loss emitted by the target pixel is about 8%. In a curve 1402, a maximum luminance value emitted by the target pixel is 77.49 nits when the target pixel is driven to emit light by using the second frame shown in this embodiment. Therefore, a maximum luminance loss emitted by the target pixel is about 0.65%. In this way, no loss of the maximum luminance value emitted by the target pixel is basically achieved.

According to the method shown in this embodiment, a controller drives, in a digital driving manner, an image modulator (for example, an LCOS) to perform image modulation. In the digital driving manner, the driving voltage applied to the target pixel is fixed, and a magnitude of the driving voltage does not need to be switched. This avoids instability caused by a parasitic capacitor of the drive circuit in a voltage conversion process, and improves stability of a VR curve and DC balance. Because the magnitude of the driving voltage does not need to be switched, power consumption caused by switching the driving voltage is reduced. In addition, a red light beam, a blue light beam, and a green light beam may be switched to be modulated at any time according to an actual requirement, and a time sequence of modulation between the light beams does not need to be limited, thereby improving flexibility of color sequence design during image modulation. In addition, according to the method shown in this embodiment, light beams of different wavelengths are driven by using an over-saturation voltage in a unified manner, and it can be further ensured that a maximum luminance value emitted by each pixel of the image modulator is basically not lost, thereby effectively increasing the maximum luminance value emitted by the image modulator. It can be learned from the description corresponding to FIG. 3 that the saturation voltage for modulating the blue light beam, the saturation voltage for modulating the green light beam, and the saturation voltage for modulating the red light beam increase in ascending order. If the first driving voltage is equal to the saturation voltage for modulating the red light beam, the first driving voltage is the over-saturation voltage for modulating the green light beam and the blue light beam. Because the first driving voltage is the saturation voltage for modulating the red light beam, the controller may directly apply the first driving voltage to the image modulation module, thereby ensuring a luminance value emitted by the image modulation module after the image modulation module modulates the red light beam. When the image modulation module needs to modulate the blue light beam and the green light beam, the controller can convert the first frame into the second frame, and the controller drives, by using the second frame, the image modulation module to modulate the green light beam and the blue light beam. In this case, when the image modulation module is driven by using the over-saturation voltage, it is ensured that the luminance value emitted by the image modulation module after the image modulation module modulates the blue light beam and the green light beam is basically not lost. Therefore, even if the image modulation module is driven by using the over-saturation voltage, the image modulation module can emit the modulated light beam with the maximum luminance value. For another example, if the first driving voltage is respectively an over-saturation voltage for modulating the red light beam, the green light beam, and the blue light beam, the controller can convert the first frame into the second frame, and the controller drives, by using the second frame, the image modulation module to modulate the red light beam, the green light beam, and the blue light beam. In this case, when the image modulation module is driven by using the over-saturation voltage, it is ensured that the luminance value emitted by the image modulation module after the image modulation module modulates the red light beam, the blue light beam, and the green light beam is basically not lost. Therefore, even if the image modulation module is driven by using the over-saturation voltage, the image modulation module can emit the modulated light beam with the maximum luminance value.

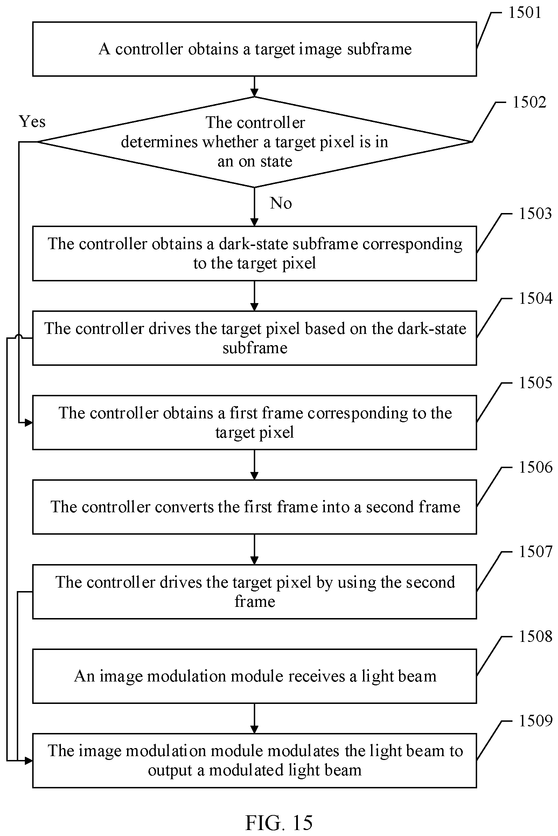

This application further provides an image modulation method. The image modulation module performs the image modulation method shown in this embodiment, so that a light beam can be modulated to emit a modulated light beam. The lens can perform projection imaging on the modulated light beam. For description of imaging, refer to the description corresponding to FIG. 1. Details are not described again. FIG. 15 is a step flowchart of an embodiment of an image modulation method according to this application.

Step 1501: A controller obtains a target image subframe.

Step 1502: The controller determines whether a target pixel is in an on state. If the target pixel is not in the on state, step 1503 is performed; or if the target pixel is in the on state, step 1505 is performed.

Step 1503: The controller obtains a dark-state subframe corresponding to the target pixel.

Step 1504: The controller drives the target pixel based on the dark-state subframe.

Step 1505: The controller obtains a first frame corresponding to the target pixel.

Step 1506: The controller converts the first frame into a second frame.

Step 1507: The controller drives the target pixel by using the second frame.

For descriptions of an execution process of step 1501 to step 1507 shown in this embodiment, refer to step 401 to step 407 corresponding to FIG. 4. Details are not described again.

Step 1508: An image modulation module receives a light beam.

Step 1509: The image modulation module modulates the light beam to output the modulated light beam.

In this embodiment, after step 1504 is performed, the target pixel to which the dark-state subframe is applied, or after step 1507 is performed, the target pixel to which the second frame is applied, modulates the light beam to output the modulated light beam. For descriptions of modulating the light beam by the image modulation module, refer to the description corresponding to FIG. 1. Details are not described again.

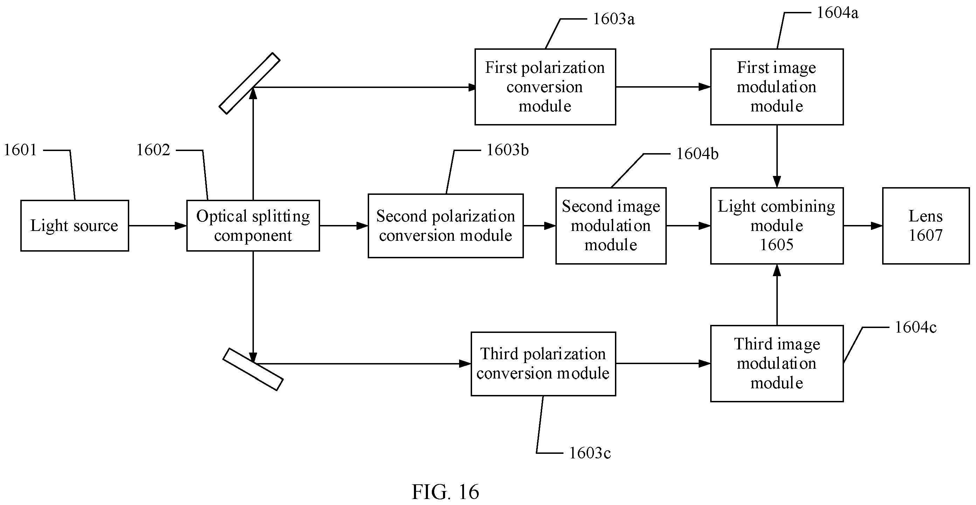

The projection system provided in this embodiment of this application is shown in FIG. 1 as an example, and this is not limited. For the projection system provided in this embodiment of this application, further refer to FIG. 16. FIG. 16 is an example diagram of a structure of a second embodiment of a projection system according to this application.

The projection system shown in this embodiment includes a light source 1601, a light splitting component 1602, a first polarization conversion module 1603a, a first image modulation module 1604a, a second polarization conversion module 1603b, a second image modulation module 1604b, a third polarization conversion module 1603c, a third image modulation module 1604c, a light combining module 1605, and a lens 1607. For specific descriptions of the components, refer to the description corresponding to FIG. 1. Details are not described again.

The light source 1601 shown in this embodiment is configured to emit an input light beam. For descriptions of the input light beam, refer to the embodiment corresponding to FIG. 1. Details are not described again. The light splitting component 1602 is configured to split the input light beam to obtain a blue light beam, a green light beam, and a red light beam. The first polarization conversion module 1603a is configured to receive the blue light beam and split the light. The third polarization conversion module 1603c is configured to receive the red light beam and split the light. The second polarization conversion module 1603b is configured to receive the green light beam and split the light. A target light beam received by the first image modulation module 1604a is blue S-polarized light obtained after optical splitting, a target light beam received by the second image modulation module 1604b is green S-polarized light obtained after optical splitting, and the target light beam received by the third image modulation module 1604c is red S-polarized light obtained after optical splitting. The light combining module 1605 receives the modulated light beam from the first image modulation module 1604a, the modulated light beam from the second image modulation module 1604b, and the modulated light beam from the third image modulation module 1604c, and combines the modulated light beams to obtain an imaging light beam. The light combining module 1605 may be a prism or the like. The light combining module 1605 may output the modulated light beam in a light combining manner like spectral light combining, polarization light combining, or aperture light combining. A specific light combining manner is not limited. The lens 1607 receives the modulated light beam, and emits an imaging light beam based on the modulated light beam, where the imaging light beam is used for projection imaging. The projection system shown in this embodiment further includes a controller. For descriptions of driving each image modulation module by the controller, refer to any one of the foregoing embodiments. Details are not described again.

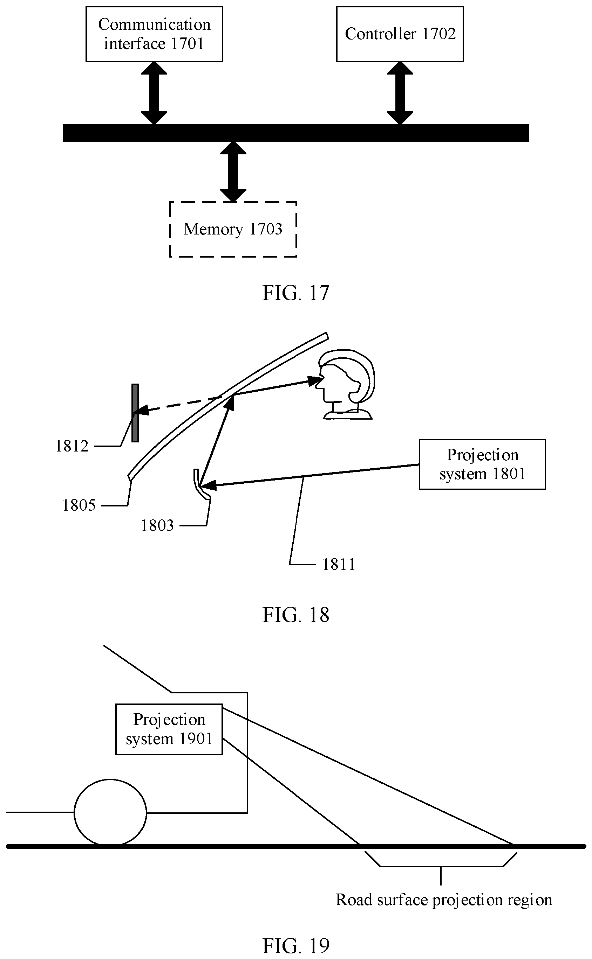

An embodiment of this application further provides a chip. FIG. 17 is an example diagram of a structure of an embodiment of a chip according to this application. The chip shown in this embodiment includes a controller 1702 and a communication interface 1701, where the controller 1702 is connected to the communication interface 1701. The controller 1702 implements signaling and data exchange through the communication interface 1701, for example, obtains an image source from the communication interface 1701. The controller 1702 is configured to execute a computer program or instructions, so that the chip can perform the method shown in the embodiment shown in FIG. 4 or FIG. 15. Optionally, the chip in this embodiment may include a memory 1703, configured to store a computer program or instructions, or may be configured to store the image source shown in the foregoing embodiment.

An embodiment of this application further provides an image modulator. For descriptions of the image modulator, refer to the foregoing descriptions of the LCOS structure. Details are not described again.

An embodiment of this application further provides a computer-readable storage medium. The computer-readable storage medium stores computer-executable instructions. When the computer-executable instructions are invoked by a computer, the method shown in the embodiment in FIG. 4 or FIG. 15 is performed.

FIG. 18 is an example diagram of a structure of an embodiment of a head-up display system according to this application. The head-up display (head-up display, HUD) system shown in this embodiment includes a projection system 1801 and an optical deflection module 1803. For descriptions of a structure of the projection system 1801, refer to any embodiment shown in FIG. 1 or FIG. 16. Details are not described again. The HUD system projects vehicle-related information to a forward field of vision of a driver. The vehicle-related information may be instrument information (such as a vehicle speed), navigation information, or the like. In this case, the driver views the vehicle-related information within the forward field of vision, eliminating the need to look down at a dashboard or a central control display beneath a steering wheel. This shortens braking response time in an emergency and improves driving safety.

The projection system 1801 in this embodiment can modulate vehicle-related information on a target light beam, and emit an imaging light beam 1811. The optical deflection module 1803 can form an amplified virtual image 1812 in front of a vehicle by using the imaging light beam. The optical deflection module 1803 in this embodiment may be a curved mirror. The curved mirror amplifies a light spot of the imaging light beam 1811 for transmission to a windshield 1805 of the vehicle. The windshield 1805 reflects the imaging light beam 1811 to the eyes of the driver for imaging. In other words, a reverse extension line of an image that is formed in the eyes of the driver forms the virtual image 1812 in front of the vehicle. In this embodiment, an example in which the HUD system is used in the vehicle is used. In another example, the HUD system may be further used in a driving tool that needs to be driven by a driver, for example, a ship, an airplane, or a helicopter.

An embodiment of this application further provides a vehicle. The vehicle includes the HUD system and the windshield that are shown in FIG. 18. Certainly, the vehicle may further include other components such as a steering wheel, a processor, a memory, a wireless communication apparatus, and a sensor. This is not specifically limited in this embodiment.

FIG. 19 is an example diagram of a structure of an embodiment of a projection vehicle lamp according to this application. The projection vehicle lamp includes a fastening base and a projection system 1901. The fastening base can fasten the projection system 1901 on a vehicle. For descriptions of the projection system 1901, refer to any embodiment shown in FIG. 1 or FIG. 16. Details are not described again. The projection system 1901 modulates a target light beam to output an imaging light beam. An imaging light beam emitted by the projection system 1901 can be imaged on a road surface on which the vehicle travels. Specifically, the imaging light beam displays a target light type in a road surface projection region of the road surface for imaging. The target light type formed by the imaging light beam may be a light blanket displayed in the road surface projection region. The light blanket notifies a driver of advanced driver assistance system (advanced driver assistance system, ADAS) information of the vehicle, main data (such as the fuel consumption, engine rotation speed, and temperature) on a vehicle dashboard, vehicle speed information, steering wheel angle information, vehicle body posture data, or the like by using a modulated image, color, light type, or the like. This is not specifically limited in this embodiment. The imaging light beam that is emitted by the projection vehicle lamp shown in this embodiment and that is displayed in the target light type may also be used to illuminate a road surface around the vehicle, or the like, to improve driving safety or navigation efficiency.

The projection vehicle lamp shown in this embodiment is used to perform vehicle lighting and image projection, and may be a low beam or an adaptive high beam, to implement vehicle-assisted autonomous driving. The vehicle may be an autonomous vehicle (autonomous vehicle, or self-piloting automobile), also referred to as an unmanned vehicle. The vehicle may alternatively be a car, a truck, a motorcycle, a bus, a lawn mower, a recreational vehicle, a playground vehicle, a trolley, a golf cart, a train, a handcart, or the like.

This embodiment provides smart glasses, and the smart glasses shown in this embodiment may be AR glasses or VR glasses. As a technology that cleverly integrates virtual information with the real world, the smart glasses extensively utilize a plurality of technical approaches such as multimedia, three-dimensional modeling, real-time tracking and registration, intelligent interaction, and sensing, simulate virtual information such as a text, an image, a three-dimensional model, music, or a video generated by a computer, and apply simulated information to the real world. The two types of information complement each other, to implement "augmentation" of the real world. As intelligent product types become more diverse, users find it increasingly convenient to use these products. The smart glasses include a frame, a lens, a light source, a controller, and a pixel array. For descriptions of the light source, the controller, and the pixel array, refer to any one of the embodiments shown in FIG. 1, FIG. 2, FIG. 3, FIG. 4, FIG. 6, FIG. 7, FIG. 8, FIG. 10, FIG. 12, FIG. 15, or FIG. 16. Details are not described again. The lens, the light source, the controller, and the pixel array are fastened on the frame, the light source is configured to transmit the input light beam to the pixel array, and the lens is configured to receive the modulated light beam from the pixel array and project the modulated light beam for imaging. Specifically, the pixel array projects the modulated light beam onto the lens on a side facing eyes of a wearer, so that the modulated light beam is reflected to the eyes of the wearer by using a reflection function of the lens.

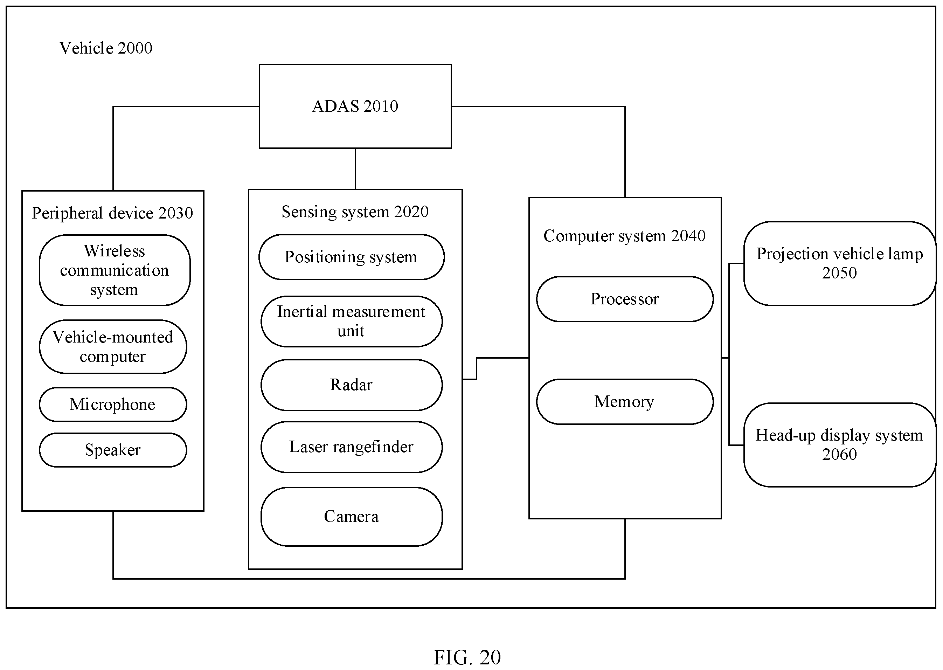

This application further provides a vehicle. FIG. 20 is a functional block diagram of an embodiment of a vehicle according to this application. In an embodiment, a vehicle 2000 is configured to be in a fully or partially autonomous driving mode. The vehicle shown in this embodiment includes a vehicle body, and the vehicle body is configured to fasten a sensor system 2020, an ADAS 2010, a peripheral device 2030, a computer system 2040, a projection vehicle lamp 2050, and an HUD system 2060.

The sensor system 2020 includes several sensors that sense and detect information about an ambient environment of the vehicle 2000. For example, the sensor system 2020 may include a positioning system (where the positioning system may be a global positioning system (global positioning system, GPS), or may be a Beidou system or another positioning system), an inertial measurement unit (inertial measurement unit, IMU), a radar, a laser rangefinder, a camera, and the like. The sensor system 2020 may further include a sensor (for example, an in-vehicle air quality monitor, a fuel gauge, or an oil temperature gauge) of an internal system of the monitored vehicle 2000. Sensor data from one or more of these sensors may be used to detect an object and corresponding features (such as the position, shape, direction, and speed) of the object. Such detection and identification are key functions for a safe operation of the autonomous vehicle 2000. The positioning system may be configured to estimate a geographic position of the vehicle 2000. The IMU is configured to sense position and orientation changes of the vehicle 2000 based on an inertial acceleration. In an embodiment, the IMU may be a combination of an accelerometer and a gyroscope. The radar may sense an object in the ambient environment of the vehicle 2000 by using a radio signal. In some embodiments, in addition to sensing an object, the radar may be further configured to sense a speed and/or a heading direction of the object. A specific type of the radar is not limited in this embodiment. For example, the radar may be a millimeter-wave radar, a lidar or the like. The laser rangefinder may sense, by using laser light, an object in an environment in which the vehicle 2000 is located. In some embodiments, the laser rangefinder may include one or more laser sources, a laser scanner, one or more detectors, and another system component. The camera may be configured to capture a plurality of images of the ambient environment of the vehicle 2000. The camera may be a static camera, a video camera, a single/binocular camera, or an infrared imager.

The ADAS 2010 senses the ambient environment, collects data, identifies, detects, and tracks static and dynamic objects, and performs system calculation and analysis based on navigation map data at any time during traveling of the vehicle, so that a driver can be aware of potential risks in advance, to effectively improve driving comfort and safety of the vehicle. For example, the ADAS 2010 may control the vehicle by using data obtained by the sensing system 2020. For another example, the ADAS 2010 may control the vehicle by using head unit data. The head unit data may be main data (such as the fuel consumption, engine speed, and temperature) on an instrument panel of the vehicle, vehicle speed information, steering wheel angle information, vehicle posture data, or the like.

The vehicle 2000 interacts with an external sensor, another vehicle, another computer system, or a user through the peripheral device 2030. The peripheral device 2030 may include a wireless communication system, a vehicle-mounted computer, a microphone, and/or a speaker. In some embodiments, the peripheral device 2030 provides a means for the user of the vehicle 2000 to interact with a user interface. For example, the vehicle-mounted computer may provide information for the user of the vehicle 2000. The user interface may further operate the vehicle-mounted computer to receive input from the user. The vehicle-mounted computer may perform an operation by using a touchscreen. In another case, the peripheral device 2030 may provide a means for the vehicle 2000 to communicate with another device in the vehicle. For example, the microphone may receive an audio (for example, a voice command or another audio input) from the user of the vehicle 2000. Similarly, the speaker may output an audio to the user of the vehicle 2000. The wireless communication system may wirelessly communicate with one or more devices directly or through a communication network.

A part of or all functions of the vehicle 2000 are controlled by the computer system 2040. The computer system 2040 may control functions of the vehicle 2000 based on inputs received from various systems (for example, the sensing system 2020, the ADAS 2010, and the peripheral device 2030) and the user interface. The computer system 2040 may include at least one processor. The processor executes instructions stored in a non-transitory computer-readable medium like a memory. The computer system 2040 may alternatively be a plurality of compute devices that control individual components or subsystems of the vehicle 2000 in a distributed manner. A type of the processor is not limited in this embodiment. For descriptions of the processor type, refer to the foregoing descriptions of the controller included in the light source. Details are not described again.

The processor can obtain vehicle driving-related information from the peripheral device 2030, the sensing system 2020, and/or the ADAS 2010, and send the vehicle driving-related information to the projection vehicle lamp 2050. For a description of the projection vehicle lamp 2050, refer to FIG. 19. Details are not described again. The processor sends the vehicle driving-related information to the HUD system 2060. For a description of the HUD system 2060, refer to FIG. 18. Details are not described again.

The foregoing embodiments are merely intended for describing the technical solutions of this application rather than limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A driving method, wherein the method comprises:
obtaining a first frame corresponding to a target pixel, wherein the target pixel is one of a plurality of pixels, the plurality of pixels are used to modulate a light beam, the first frame corresponds to a first driving voltage, the first driving voltage corresponds to a first bit value, and the first driving voltage is an over-saturation voltage at which the target pixel modulates the light beam;
inserting M target subframes into the first frame to obtain a second frame, wherein M is any integer greater than 1, the target subframe corresponds to a second driving voltage, the second driving voltage corresponds to a second bit value, and in the M target subframes, a subframe of the first frame is spaced between two adjacent target subframes, or a part of the subframe is spaced between two adjacent target subframes; and
driving the target pixel by using the second frame.

2. The method according to claim 1, wherein after obtaining the first frame corresponding to the target pixel, the method further comprises:
dividing the first frame into N subframes, wherein N is any integer greater than 1, the N subframes comprise a first subframe and a second subframe adjacent in time, the first subframe corresponds to a first polarity of a first driving voltage, the second subframe corresponds to a second polarity of the first driving voltage, and the first polarity is opposite to the second polarity.

3. The driving method according to claim 2, wherein that the subframe of the first frame is spaced between the two adjacent target subframes comprises:
the target subframe is located between the first subframe and the second subframe.

4. The driving method according to claim 3, wherein the M target subframes comprise a first target subframe and a second target subframe adjacent in time, the first target subframe corresponds to a third polarity of the second driving voltage, the second target subframe corresponds to a fourth polarity of the second driving voltage, and the third polarity is opposite to the fourth polarity.

5. The driving method according to claim 2, wherein inserting the M target subframes into the first frame to obtain the second frame comprises:
inserting the M target subframes into the first frame, wherein K subframes are spaced between two target subframes adjacent in time, and K is any integer greater than 1.

6. The driving method according to claim 2, wherein inserting the M target subframes into the first frame to obtain the second frame comprises:
randomly inserting the target subframe between two subframes adjacent in time in the N subframes.

7. The driving method according to claim 2, wherein inserting the M target subframes into the first frame to obtain the second frame comprises:
inserting at least one target subframe into an imaging subframe, wherein the imaging subframe is each of the N subframes, or the imaging subframe is some of the N subframes.

8. The driving method according to claim 7, wherein that the part of the subframe is spaced between the two adjacent target subframes comprises:
a part of the imaging subframe is spaced between two adjacent target subframes.

9. An image modulation method, wherein the method is applied to an image modulation module, the image modulation module comprises a pixel array and a controller, the pixel array comprises a plurality of pixels, and the method comprises:
obtaining, by the controller, a first frame corresponding to a target pixel, wherein the target pixel is one of the plurality of pixels, the first frame corresponds to a first driving voltage, the first driving voltage corresponds to a first bit value, and the first driving voltage is an over-saturation voltage at which the target pixel modulates a light beam;
inserting, by the controller, M target subframes into the first frame to obtain a second frame, wherein M is any integer greater than 1, the target subframe corresponds to a second driving voltage, the second driving voltage corresponds to a second bit value, and in the M target subframes, a subframe of the first frame is spaced between two adjacent target subframes, or a part of the subframe is spaced between two adjacent target subframes;
driving, by the controller, the target pixel by using the second frame; and
receiving, by the pixel array, a target light beam, wherein
the target pixel to which the second frame is applied modulates the target light beam to emit the modulated light beam, wherein the modulated light beam is used for projection imaging.

10. The method according to claim 9, wherein after obtaining, by the controller, the first frame corresponding to the target pixel, the method further comprises:
dividing, by the controller, the first frame into N subframes, wherein N is any integer greater than 1, the N subframes comprise a first subframe and a second subframe adjacent in time, the first subframe corresponds to a first polarity of a first driving voltage, the second subframe corresponds to a second polarity of the first driving voltage, and the first polarity is opposite to the second polarity.

11. The method according to claim 10, wherein that the subframe of the first frame is spaced between the two adjacent target subframes comprises:
the target subframe is located between the first subframe and the second subframe.

12. The driving method according to claim 11, wherein the M target subframes comprise a first target subframe and a second target subframe adjacent in time, the first target subframe corresponds to a third polarity of the second driving voltage, the second target subframe corresponds to a fourth polarity of the second driving voltage, and the third polarity is opposite to the fourth polarity.

13. A chip, comprising a communication interface and a controller connected to the communication interface, wherein the communication interface is configured to input and/or output signaling or data; and
the controller is configured to execute a computer executable program, so that the method according to any one of claims 1 to 8 is performed.

14. A projection system, comprising a light source, a polarization conversion module, a lens, a controller, and a pixel array, wherein the controller and the pixel array are configured to perform the method according to any one of claims 9 to 12;
the light source is configured to transmit an input light beam to the polarization conversion module;
the polarization conversion module is configured to convert a polarization state of the input light beam to obtain a target light beam; and
the lens is configured to receive the modulated light beam from the pixel array, and emit an imaging light beam based on the modulated light beam, wherein the imaging light beam is used for projection imaging.

15. A head-up display system, comprising an optical deflection module and the projection system according to claim 14, wherein
the projection system is configured to transmit the imaging light beam to the optical deflection module; and
the optical deflection module is configured to transmit the amplified imaging light beam to a windshield, and the imaging light beam forms a virtual image through the windshield.

16. A vehicle lamp, comprising a fastening base and the projection system according to claim 14, wherein the fastening base is configured to fasten the projection system to a vehicle.

17. A vehicle, comprising a vehicle body and a windshield, wherein the vehicle further comprises the head-up display system according to claim 15 and/or comprises the vehicle lamp according to claim 16;
the controller is configured to obtain vehicle driving related information; and
the controller is further configured to drive the pixel array, and modulate the vehicle driving related information onto the target light beam to obtain the modulated light beam.

18. Smart glasses, wherein the smart glasses comprise a frame, a lens, a light source, a controller, and a pixel array, the controller and the pixel array are configured to perform the method according to any one of claims 9 to 12, and the frame is configured to fasten the lens, the light source, the controller, and the pixel array;
the light source is configured to transmit the input light beam to the pixel array; and
the lens is configured to receive the modulated light beam from the pixel array, and perform projection imaging on the modulated light beam.

19. A computer-readable storage medium, wherein the computer-readable storage medium stores computer-executable instructions; and when the computer-executable instructions are invoked by a computer, the method according to any one of claims 1 to 8 is performed.
